Europäisches Patentamt

European Patent Office

Office européen des brevets

(11) Veröffentlichungsnummer: **0 090 768**
A2

## EUROPÄISCHE PATENTANMELDUNG

(21) Anmeldenummer: 83810112.9

(22) Anmeldetag: 18.03.83

(51) Int. Cl.³: **F 16 H 25/20**, F 16 H 35/10

(30) Priorität: 18.03.82 CH 1687/82

(71) Anmelder: **TEM AG für Elektronik, Falknisstrasse 21, CH-7000 Chur (CH)**

(43) Veröffentlichungstag der Anmeldung: 05.10.83 Patentblatt 83/40

(72) Erfinder: **Letta, Nicolo, Falknisstrasse 21, CH-7000 Chur (CH)**

(84) Benannte Vertragsstaaten: **CH DE FR LI SE**

(74) Vertreter: **Brühwiler, Hans et al, Brühwiler & Co. Löwenstrasse 1 Postfach 996, CH-8021 Zürich (CH)**

(54) **Stellantrieb für Hubbewegungen.**

(57) Eine Flanschstange (13) besitzt einen Flansch (14), der in einem Gehäuse (17) eines Kupplungsteiles (15) in der Hubrichtung (C) auf- und abbewegbar angeordnet ist. Mittels Druckfedern (18, 19) ist der Flansch (14) beidseitig im Gehäuse (17) abgestützt. Die Hubbewegung (C) kann somit auf das Gehäuse (17) und auf eine an diesem befestigte Ventilstange (29) eines Ventils (30) übertragen werden. Bei einem auftretenden Gegendruck oder Widerstand im Ventil (30) tritt die Federwirkung einer der Federn (18, 19) in Kraft und die Flanschstange (13) bewegt sich entgegen dem Druck der Feder solange weiter, bis ein Kontaktarm (20) am Flansch (14) an einen der Kontakte (24, 25) gelangt, durch welche der Antrieb (1) abgestellt wird. Auf diese Weise kann eine Überlastkraft, z.B. am Ventilsitz, vermieden werden, da diese von den Federn (18, 19) aufgenommen werden kann.

Stellantrieb für Hubbewegungen
_____

Die Erfindung betrifft einen Stellantrieb für Hubbewegungen, insbesondere für Ventile, der ein Antriebselement mit Zwischengetriebe zur Erteilung einer Drehbewegung und Einrichtungen zur Umwandlung der Drehbewegung in eine Hubbewegung für einen mit der Antriebsspindel verbindbaren Arbeitsteil besitzt und mit einer Ueberlastsicherung gegen unerwünschte Kraftwirkungen auf die Arbeitsspindel für den Endausschlag eines Ventilsitzes ausgerüstet ist, sowie den Stellantrieb an einem Ventil und dessen Verwendung an demselben.

Bei den bisher bekannten Stellantrieben der vorgenannten Art wurde zum Schutz des Ventils z.B. ein Scherstift vor dem kraftgebenden Teil eingebaut. Dies erfordert jedoch, um eine gewisse Dichtheit des Ventils zu erreichen, eine genaue Einstellung des Hubs, da keine Ueberlappung der Bewegung, wie z.B. bei der Drehbewegung, erfolgt. Liegt zum Schutz eines Ventils ein Antriebsmotor mit nur kleiner Leistung vor, um eine Zerstörung des Ventils zu vermeiden, so wird derselbe bereits durch Auftreten von Schmutz blockiert, bevor das Ventil geschlossen wird. Durch ein Nachlaufen des abgeschalteten Motors wird überdies eine Ueberlastkraft z.B. auf den Ventilsitz und/oder Kolben ausgeübt, wodurch derselbe zerstört werden kann.

Es ist daher die Aufgabe der vorliegenden Erfindung, einen Stellantrieb für Hubbewegungen der eingangs genannten Art ohne die Nachteile der bekannten Stellantriebe zu schaffen, der ein zuverlässiges Abschalten des Antriebselementes bei irgendeiner Krafteinwirkung auf die Antriebsspindel, z.B.

- 2 -

beim Erreichen einer Schliess- oder Oeffnungsstellung des Arbeitsteiles, insbesondere eines Ventils, gewährleisten soll, ohne dass auch durch ein Nachlaufen des Antriebselementes eine unzulässige Kraft auf die Antriebsspindel oder z.B. den Arbeitsteil ausgeübt werden kann.

Zur Lösung dieser Aufgabe ist der eingangs geschilderte Stellantrieb erfindungsgemäss dadurch gekennzeichnet, dass die Antriebsspindel mit dem Arbeitsteil über einen Kupplungsteil verbindbar ist, bei dem die Antriebsspindel mit dem Arbeitsteil durch mindestens ein federndes Element koppelbar ist, das zwischen einem Kontaktträger und einem Kontaktbetätigungsteil angeordnet ist, die durch die Hubbewegung relativ zueinander bewegbar sind, so dass der Kontaktbetätigungsteil mindestens einen am Kontaktträger befindlichen, mit dem Antriebselement verbundenen Kontakt betätigt.

Durch den Stellantrieb nach der Erfindung liefert ohne eine Endeinstellung eine Ueberlastsicherung bei der das Ab- bzw. Einschalten des Antriebselementes, z.B. des Antriebsmotors, unabhängig vom Hub erfolgen kann. Damit wird nicht nur die Antriebsspindel gegen eine unerwünschte Krafteinwirkung geschützt, sondern auch andere Teile des Stellantriebes und auch des mit diesem verbindbaren Arbeitsteiles, z.B. der Ventilsitz eines Ventils vor vorzeitigem Verschleiss oder einer Zerstörung gesichert. Auch das Zwischengetriebe wird dadurch gegen eine Krafteinwirkung abgesichert. Der Stellantrieb kann für Absperr-, Drossel-, Umlenk-, Misch- und Mengenregulierventile verwendet werden, die für Gase oder Flüssigkeiten eingesetzt werden können. In vorteilhafter Weise kann für den Stellantrieb ein Motor mit starker Leistung verwendet werden, da das Abschalten in jeder Lage bei Auftreten einer Gegenkraft erfolgt und nicht nur bei einem zuvor festgelegten
Endausschlag. In besonders vorteilhafter Weise kann der Stellantrieb an einem Ventil mit Hubbewegung vorliegen bzw. verwendet werden, bei dem die Antriebsspindel über den Kupplungsteil
mit der Ventilstange verbunden wird. Bei einem z.B. Flüssigkeit fördemdem Ventil kann daher bereits bei Auftreten von
Gegendruck durch die Flüssigkeit am Ventil ein Abschalten
durch den Stellantrieb erfolgen.

Vorteilhafte Ausführungsformen des Stellantriebes nach der
Erfindung sind durch die Merkmale der Ansprüche 2 bis 21 umschrieben.

Die Erfindung ist nachstehend in Ausführungsbeispielen anhand
der Zeichnungen näher erläutert. Es zeigen:

Fig. 1 bis 3   je einen Stellantrieb in schematischer Darstellung im Schnitt; und

Fig. 4 bis 7   je einen Kupplungsteil eines Stellantriebes in
               schematischer Darstellung im Schnitt.

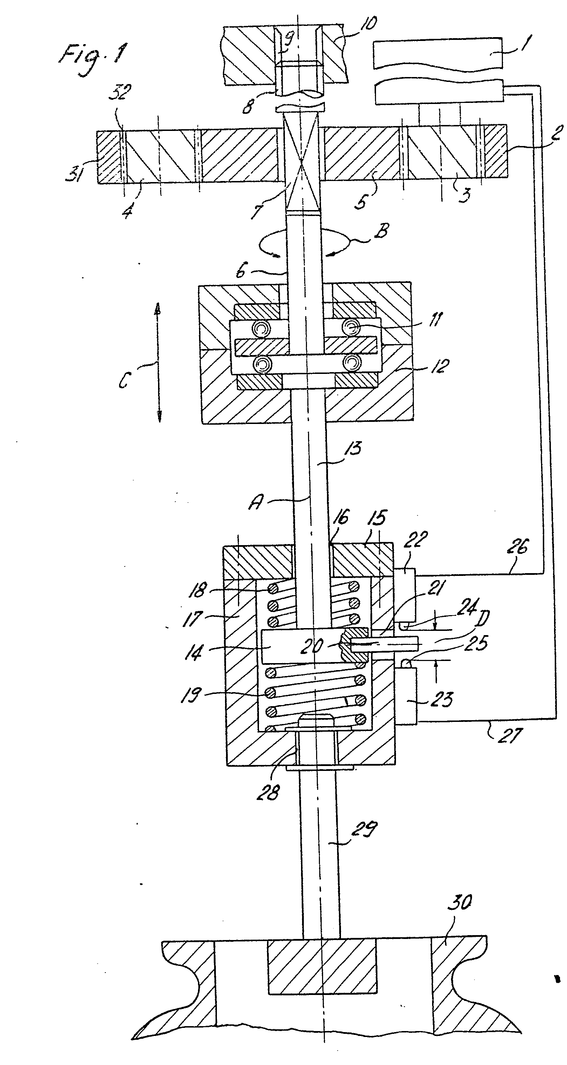

Bei dem Stellantrieb nach Fig. 1 wird von einem Antriebselement 1 ein Zwischengetriebe 2 angetrieben, das als ein Planetengetriebe mit Planetenrädern 3 und 4 sowie einem Sonnenrad 5
vorliegt. Auf der Welle bzw. Achse A des Sonnenrades 5 sitzt
eine Antriebsspindel 6, die im Bereich des Sonnenrades 5 als
Vierkant 7 ausgebildet ist und somit von diesem mitgenommen
wird. Es erhält daher vom Antriebselement 1 je nach Drehrichtung derselben über das Zwischengetriebe 2 eine Drehbewegung
gemäss Pfeil B. An dem oberen, über das Sonnenrad 5 hinausragenden Ende der Antriebsspindel 6 liegt ein Gewinde 8 vor, welches in ein entsprechend ausgebildetes Gegengewinde 9 in einem stationären Gehäuse 10 (nur teilweise gezeigt) vorliegt. Durch die Gewinde 8 und 9 wird der Antriebsspindel 6 eine Hubbewegung in Richtung von Doppelpfeil C erteilt. Mit dem anderen freien Ende wird die Antriebsspindel 6 von einem Axialkugellager 11 aufgenommen, in dessen unterem Teil die Drehbewegung B aufgehoben wird. Eine mit dem Gehäuse 12 des Axialkugellagers 11, z.B. durch Einpressen, verbundene Flanschwelle 13 erhält daher nur die durch die Gewinde 8,9 hervorgerufene Hubbewegung C. Die Flanschwelle 13 ist dabei koaxial zur Antriebswelle 6, d.h. auf der gemeinsamen Achse A, angeordnet.

Mit einem Flansch 14 befindet sich die Flanschwelle 13 in einem Kupplungsteil 15, wobei die Flanschwelle 13 durch eine Oeffnung 16 in ein Gehäuse 17 des Kupplungsteiles 15 frei hindurchgeführt ist, so dass sie zusammen mit dem Flansch 14 in der Hubrichtung C auf- und abbewegbar ist. Der Flansch 14 ist beidseitig im Gehäuse 17 durch zwei Druckfedern 18 und 19 abgestützt, die entgegengesetzt zueinander in Richtung der Achse A einerseits am Flansch 14 und andererseits am Gehäuse 17 angreifen. Vom Flansch 14 weg quer zur Axialrichtung A erstreckt sich ein Kontaktarm 20, z.B. in Form eines Bolzens, frei durch eine Oeffnung 21 des Gehäuses 17 nach aussen zwischen zwei z.B. elektrisch arbeitende Endschalter 22 und 23, die mit Kontakten 24 und 25 in einem Axialabstand D voneinander aussen am Gehäuse 17 befestigt sind. Durch Leitungen 26 und 27 sind die Endschalter 22 und 23 mit dem Antrieb 1 verbunden. Die Hubbewegung kann vom Flansch 14 über die Feder 18 bzw. 19 auf das Gehäuse 17 übertragen werden. Am Gehäuse 17 ist in dessen unterem Teil eine weitere Oeffnung 28 vorgesehen, die zur Aufnahme einer Ventilstange 29 eingerichtet ist, so dass derselben vom Gehäuse 17 die Hubbewegung C erteilt werden kann. Die Ventilstange 29 gehört zu einer Ar-

matur bzw. einem Ventil 30, das durch den Hub C geschlossen
oder geöffnet werden kann. Aus Gründen der Uebersicht ist
das Ventil 30 nur teilweise dargestellt und kann in bekannter
Weise eingerichtet sein. Das Ventil 30 ist z.B. mit dem Gehäuse 10 verbunden, welches den gesamten Stellantrieb umgeben kann und aus Gründen der Uebersicht lediglich nur teilweise dargestellt ist.

Der in Fig. 1 dargestellte Stellantrieb, insbesondere der
Kupplungsteil 15 desselben arbeitet wie folgt:

Bei der durch ein Signal am Antrieb 1 ausgelösten Hubbewegung
C werden sowohl die Flanschwelle 13, das Gehäuse 17 als auch
die Ventilstange 29 auf- bzw. abbewegt. Dabei wird die Hubbewegung C im wesentlichen ohne Kompression der Federn 18
und 19 unmittelbar auf das Gehäuse 17 übertragen. Erst bei
einem z.B. im Ventil 30 auftretenden Widerstand oder Gegendruck, z.B. bei einem Anschlag eines Ventiltellers oder Kolbens
am Ventilsitz des Ventils 30 tritt die Federwirkung in Kraft.
Die Flanschwelle 13 kann sich dann entweder entgegen der Feder
18 oder entgegen der Feder 19 noch ein kurzes Wegstück in
Hubrichtung C weiterbewegen, bis der Kontaktarm 20 einen der
Kontakte 24 oder 25 berührt. Dann schaltet der entsprechende
Endschalter 22 bzw. 23, so dass der Antrieb 1 abgestellt
wird. Auf diese Weise wird der Gegendruck durch die Feder
18 bzw. 19 abgefangen und eine Ueberbeanspruchung der
empfindlichen Teile des Stellantriebes bzw. des Ventils 30
wird dadurch vermieden. Auch ein Nachlaufen des Antriebes 1
kann dabei keine Ueberlastkraft z.B. am Ventilsitz oder am
Getriebe 2 erzeugen, weil eine solche durch die Feder 18 bzw.
19 ebenfalls abgefangen wird. Da die Endschalter 22 und 23
auf dem Gehäuse 17, d.h. dem Kupplungsteil 15 selbst ange-

bracht sind, der die Hubbewegung C mitmacht, werden sie stets
bei der Hubbewegung C mitgeführt und können in jeder Lage des
Kupplungsteiles 15 und damit der Flanschwelle 13 ansprechen.
Es ist daher keine aufwendige Endanschlageinstellung notwendig, vielmehr ist die Sicherung gegen Ueberlastung unabhängig von der jeweiligen Arbeitsstellung. Es ist damit eine gegen Ueberlastung sichernde Kupplungseinrichtung geschaffen, die ein Ab- bzw. Einschalt.
des Motors unabhängig von der Hubgrösse durchführt. In vorteilhafter Weise wird die Oeffnung 21, durch welche sich der
Kontaktarm 13 erstreckt, mit einer Weite ausgeführt, dass derselbe entsprechend der eingestellten bzw. Vorspannkraft der
Federn 18 und 19 und dem Abstand D der Kontakte 24 und 25
voneinander sich frei in derselben auf- und abbewegen kann.
Vorzugsweise wird der Abstand D in einer Grösse gewählt, dass
sich der Flansch 14 der jeweiligen Federkraft entgegen noch
ungefähr 1 bis 2 mm weiter auf- bzw. oder abwärts bewegen kann.
Auf diese Weise lässt sich z.B. auch ein Nachlaufen des Antriebes 1 abfangen.

Am Zwischengetriebe 2 ist noch ein Zahnrad 31 mit einer Innenverzahnung 32 vorgesehen, die in die Planetenräder 3 und 4
eingreift. Durch einen entsprechend angeordneten Auskupplungsmechanismus (nicht gezeigt) kann das Zwischengetriebe 5 vom
Antrieb 1 abgekuppelt und durch das Zahnrad 31 durch Hand
verstellt werden. Hierdurch lässt sich in geeigneter Weise
die Hubhöhe ändern. In der Darstellung von Fig. 1 sind lediglich nur die beiden Planetenräder 3 und 4 gezeigt, wobei jedoch um z.B. 90° versetzt, in gleicher Weise zwei weitere
Planetenräder am Sonnenrad 5 angeordnet sein können. Gemäss
Fig. 2, in welcher mit Fig. 1 gleiche Teile die gleichen Bezugszeichen aufweisen, besitzt das Zwischengetriebe 2 ein
Sonnenrad 33 mit einem Innengewinde 34, das in ein entsprechend

7

- 13 -

ausgebildetes Gegengewinde 35 einer Antriebsspindel 36 eingreift. Mit ihrem oberen, über das Sonnenrad 33 hinausragenden Ende, ist die Antriebsspindel 36 mittels eines Vierkantteiles 37 im Gehäuse 10 geführt, so dass eine Drehbewegung
der Antriebsspindel 36 ausgeschlossen wird. Sie erhält daher
durch die Gewinde 34 und 35 lediglich die Hubbewegung C. Die
Ausführungsform nach Fig. 2 arbeitet im Uebrigen in der
gleichen Weise wie die zuvor beschriebene Ausführungsform nach
Fig. 1.

Wie Fig. 2 weiterhin zeigt, ist an dem mit dem Antriebselement
1 verbundenen Planetenrad 3 ein Stössel 38 vorgesehen, der
durch einen Schieber 39 mit abgeschrägter Fläche in Richtung
auf das Antriebselement 1 gestossen werden kann, so dass dasselbe vom Getriebe 2 abgekuppelt werden kann. Auf diese Weise
kann dann das Getriebe 2 mittels des Handzahnrades 31 durch
Hand verstellt werden, wie es bereits in der Ausführungsform
nach Fig. 1 geschildert wurde.

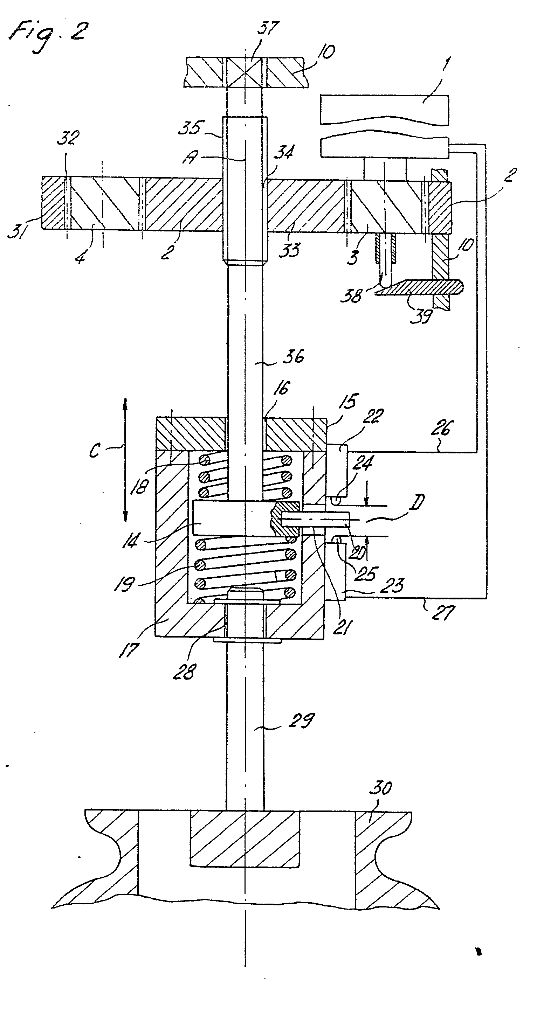

Gemäss Fig. 3 erhält eine Antriebsspindel 41 eine Drehbewegung
von einem Planetengetriebe 42, das von einem Antriebselement
43 angetrieben wird. Die Antriebsspindel 41 sitzt fest auf der Drehachse E des Sonnenrades 44 des Planetengetriebes 42, wobei
das Planetenrad 45 mit dem Antriebselement 43 verbunden ist.
Die Antriebsspindel 41 wird mit einem Taumelflansch 46, der
auf derselben gegenüber der Achse E geneigt angeordnet ist,
in einer entsprechend ausgebildeten Führungsnut 47 eines Gehäuses 48 geführt. Bei Drehung gemäss Pfeil F um die Längsachse E erhält das Gehäuse 48 eine Hubbewegung gemäss Pfeil G.
Die Antriebsspindel 41 endet unterhalb des Taumelflansches
46 frei in einer Oeffnung 49 des Gehäuses 48, in welcher sich die Führungsnut 47 befindet. Im Gehäuse 48 ist ein Flansch
50 frei bewegbar angeordnet, der wiederum beidseitig durch
zwei Federn 51 und 52 abgestützt ist, die entgegengesetzt
zueinander in Richtung der Achse E einerseits am Flansch 50
und andererseits am Gehäuse 48 angreifen. Der Flansch 50
wird am oberen Ende einer Ventilstange 53 getragen, die sich
frei bewegbar durch eine Oeffnung 54 koaxial zur Antriebsspindel 41 durch das Gehäuse 48 erstreckt und zu einem Ventil 54 gehört.

Am Flansch 50 ist ein Kontaktarm 55 angebracht, der sich
vom Gehäuse weg quer zur Axialrichtung E zwischen zwei z.B.
elektrisch betriebene Endschalter mit Kontakten 56 und 57
erstreckt. Die Kontakte 56 und 57 sind mit einem Abstand H
voneinander angeordnet, der ein Abschalten des Antriebselementes 43 bei Auftreten einer Gegenkraft im Ventil 54 gewährleistet. Die Endschalter sind am Gehäuse 48 als Kontaktträger befestigt und mit dem Antriebselement 43 durch Leitungen 58 und 59 verbunden. Bei Drehung der Antriebsspindel
41 gemäss Pfeil F taumelt der Taumelflansch 46 und erteilt damit dem Gehäuse 48 die Hubbewegung gemäss Pfeil G, die entweder als Auf- oder Abwärtsbewegung über die Feder 51 bzw.
die Feder 52 auf den Flansch 50 und damit auf die Ventilstange 53 übertragen wird. Der Kontaktarm 55 wird bei Auftreten einer Kraft an der Ventilstange 53, z.B. beim Aufsitzen des Ventilkolbens am Ventilsitz, gegen die Kraft
der Feder 51 oder 52 entsprechend vertikal auf- oder abbewegt und schaltet bei Anschlag an einen der Kontakte
56 oder 57 den Antrieb 43 ab, wie es vorstehend für
die Ausführungsform nach Fig. 1 bereits geschildert wurde. Da-

mit ist ebenfalls durch einen Kupplungsteil 60 eine Ueberlastsicherung geschaffen. Der so geschaffene Stellantrieb
kann zusammen mit dem Ventil 54 in einem Gehäuse oder Gestell 61 angeordnet sein (teilweise gezeigt).

In gleicher Weise wie in der vorstehenden Ausführungsform
nach Fig. 1 geschildert, wird durch den auch hier gebildeten
Ueberlastkupplungsteil 46 mit den Federn eine Ueberlastkraft
sowohl am Planetengetriebe 26 als auch am Ventil 39 vermieden bzw. abgefangen.

Fig. 4 zeigt in einfachster Ausführungsform einen Kupplungsteil 62 für einen Stellantrieb nach der Erfindung, bei dem
eine Hubbewegungen gemäss Doppelpfeil K ausführende Antriebsspindel 63 mittels eines Flansches 64 über eine Feder 65
mit einem Flansch 66 am freien Ende einer Arbeitsstange 67,
z.B. einer Ventilstange, gekoppelt ist. Der Flansch 66 ist
als Kontaktträger ausgebildet und besitzt einen Auslegerarm
68 mit Kontakten 69 und 70, die in Form von nachgiebigen
Blechlamellen ausgebildet sind. Der Flansch 64 ist als Kontaktbetätigungsteil ausgebildet und besitzt einen Kontaktarm
71, der sich zwischen die Kontakte 69 und 70 erstreckt und
an diesen anliegt. Durch die zwischen dem Kontaktträger 66
und dem Kontaktbetätigungsteil 64 angeordnete Feder 65, wird
die Hubbewegung K auf die Arbeitsstange 67 übertragen. Tritt
z.B. an der Arbeitsstange 67 oder z.B. auch an der Antriebsspindel 63 eine unerwünschte Kraft auf, so wird dieselbe
durch die Feder 65 abgefangen, wobei jedoch entweder der
Flansch 66 oder der Flansch 64 gegen den Federdruck weiterhin der Hubbewegung K in der einen oder anderen Richtung
folgt. Dabei werden die Kontaktlamellen 69 und 70 durch den
Kontaktarm 71 auseinandergedrängt, wodurch z.B. ein Stromfluss zwischen denselben durch den Kontaktarm 71 hindurch unterbrochen und ein an die Leitungen 72 angeschlossener Antrieb abgeschaltet wird. Aus dieser Ausführungsform ist ersichtlich, dass der Kupplungsteil in beiden Richtungen eine Ueberlastsicherung bietet, je nachdem, an welchem Flansch 64 oder 66 eine unerwünschte Kraft in Axialrichtung auftritt.

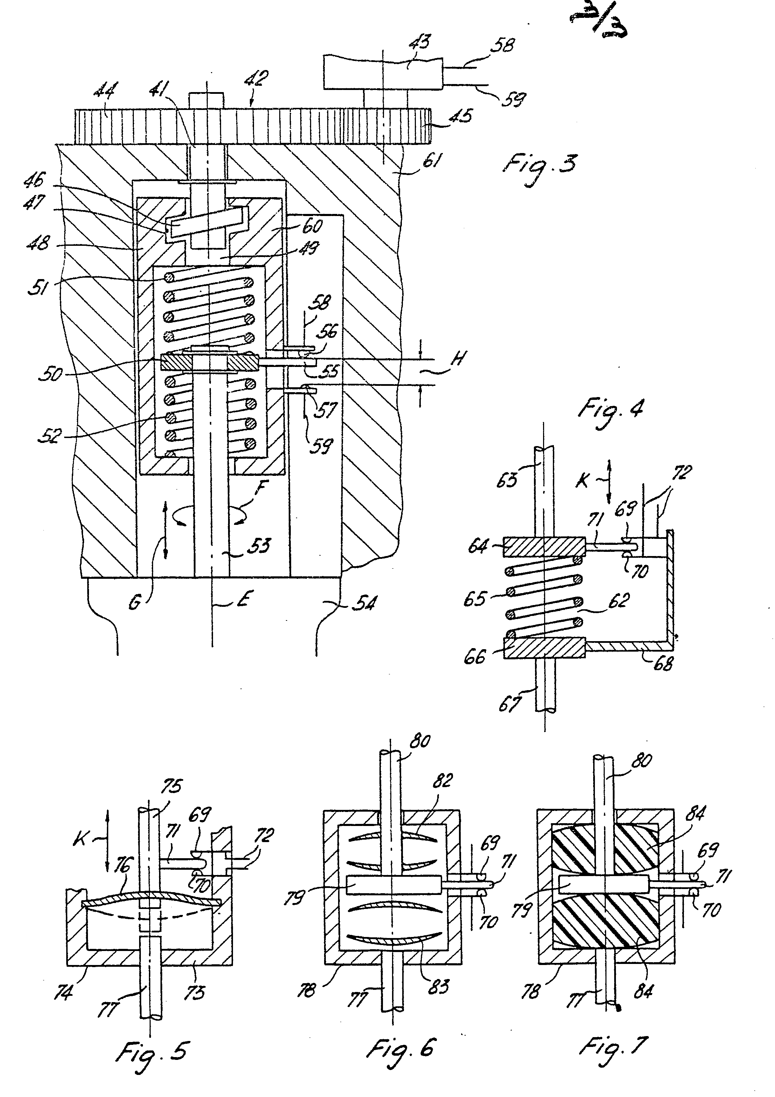

Nach Fig. 5 kann an einem Rahmen oder Gestell 73 eines Ueberlastkupplungsteiles 74 eine Antriebsspindel 75 ihre Hubbewegung gemäss Pfeil K über eine einzige vorgespannte Membranfeder 76 auf das Gestell 72 übertragen, durch welche die Antriebsspindel 75 unmittelbar im Gestell 73 abgestützt ist und die in dasselbe eingelassen ist. Eine koaxial zur Antriebsspindel 75 am Gestell 73 befestigte Ventilspindel 77 erhält dann die notwendige Hubbewegung K über das Gestell 73. Am Gehäuse 47 sind wiederum die in der vorstehenden Ausführungsform nach Fig. 4 beschriebenen entsprechenden Kontakte 69 und 70 und Kontaktarmeinrichtungen 71 vorgesehen. Diese Ausführungsform des Kupplungsteiles 74 hat den Vorteil, dass die Feder 76 einerseits unmittelbar an der Antriebsspindel 75 und andererseits am Gestell 73 angreift, an welchem die Ventilstange 77 befestigt ist. Aus diesem Grunde ist der Kontaktarm 71 unmittelbar an der Antriebsspindel 75 angebracht.

Bei einer die Hubbewegung K ausführenden Ueberlastungskupplung 78 nach Fig. 6 kann ein Flansch 79 an einer Flanschstange 80 in einem Gehäuse 81 auch durch Federscheiben 82 und 83 beidseitig abgestützt sein. Am Gehäuse 81 sind die bereits in den Fig. 4 oder 5 gezeigten Kontakte 69 und 70 angebracht und der Flansch 79 besitzt den Kontaktarm 71 als Kontaktbetätigungsteil. In Fig. 7, in welcher gleiche Teile mit Fig. 6 die gleichen Bezugszeichen haben, ist der Flansch 79 beidseitig durch federelastische Gummipuffer 84 abgestützt. Die
Funktionsweise der vorstehend beschriebenen Ausführungsformen
nach Fig. 4 bis 7 ist die gleiche, wie sie für die Ausführungsform nach Fig. 1 bis 3 beschrieben wurde. Auch können die Ausführungsformen der Fig. 4 bis 5 anstelle der Kupplungsteile
in den Ausführungsformen nach Fig. 1 bis 3 treten.

- 1 -

P a t e n t a n s p r ü c h e

1. Stellantrieb für Hubbewegungen, insbesondere für Ventile, der ein Antriebselement mit Zwischengetriebe zur Erzeugung einer Drehbewegung und Elemente zur Umwandlung der Drehbewegung in eine Hubbewegung für einen mit der Antriebsspindel verbindbaren Arbeitsteil besitzt, und der eine Ueberlastsicherung gegen unerwünschte Krafteinwirkungen auf die Arbeitsspindel aufweist, dadurch gekennzeichnet, dass die Antriebsspindel (6,13;36;41;63;75;80) mit dem Arbeitsteil (29;53;67;77) über einen Kupplungsteil (15;60;62; 74;78) verbindbar ist, bei dem die Antriebsspindel (6,13; 36;41;63;75;80) mit dem Arbeitsteil (29;53;67;77) durch mindestens ein federndes Element (18,19;51,52;65;76;82,83; 84) koppelbar ist, das zwischen einem Kontaktträger 17;48; 66,68;73;81) und einem Kontaktbetätigungsteil (14,20;50,55; 64,71;75,71;79;71) angeordnet ist, die durch die Hubbewegung (C;G;K) relativ zueinander bewegbar sind, so dass der Kontaktbetätigungsteil (14,20;50,55;64,71;75,71;79,71) mindestens einen am Kontaktträger (17;48;66,68;73;81) befindlichen, mit dem Antriebselement (1;43) verbundenen Kontakt (24,25;56,57;69,70) betätigt.

2. Stellantrieb nach Anspruch 1, dadurch gekennzeichnet, dass der kontaktträger (17;66,68;73;81) Anschlusseinrichtungen (28) für den Arbeitsteil (29;67;77) besitzt und der Kontaktbetätigungsteil (14,20;64,71;75,71;79,71) an der Antriebsspindel (6,13;36;63;75;80) angeordnet ist.

3. Stellantrieb nach Anspruch 1, dadurch gekennzeichnet, dass der Kontaktträger (48) an der Antriebsspindel (41) ange-

A-30541-EP-01
17.03.1983/xy

ordnet ist und der Kontaktbetätigungsteil (50,55) eine Anschlusseinrichtung für den Arbeitsteil (53) besitzt.

4. Stellantrieb nach Anspruch 2, dadurch gekennzeichnet, dass am gegenüber dem Kontaktträger (17;66,68;73;81) freien Ende der Antriebsspindel (6,13;36;63;75;80) ein Flansch (14;64; 79) sitzt, der durch das mindestens eine federnde Element (18,19;65;76;82,83;84) am Kontaktträger (17;66,68;73;81) abgestützt ist.

5. Stellantrieb nach Anspruch 3, dadurch gekennzeichnet, dass der Kontaktbetätigungsteil (50,55) einen Flansch (50) besitzt, der durch das mindestens eine federnde Element (51, 52) am Kontaktträger (48) abgestützt ist.

6. Stellantrieb nach einem der Ansprüche 1 bis 5, dadurch gekennzeichnet, dass der Kontaktbetätigungsteil (14,20;50,55; 64,71;75,71;79,71) einen Kontaktarm (20;55;71) aufweist, der sich quer zur Hubbewegungsrichtung (C;G;K) erstreckt und den mindestens einen Kontakt (24,25;56,57;69,70) betätigt.

7. Stellantrieb nach Anspruch 6, dadurch gekennzeichnet, dass sich der Kontaktarm (20;55;71) zwischen zwei in Hubbewegungsrichtung (C;G;K) mit Abstand (D;H) voneinander angeordnete Kontakte (24,25;56,57;69,70) erstreckt.

8. Stellantrieb nach Anspruch 4, dadurch gekennzeichnet, dass der Flansch (14;50;79) durch zwei Federn (18,19;51,52;82, 83) in einem die Kontakte (24,25;56,57;69,70) tragenden Gehäuse (17;48;81) abgestützt und relativ zu diesem bewegbar ist und einen Kontaktarm (20;55;71) besitzt, der

- 3 -

sich durch eine Oeffnung (21) im Gehäuse (17;48;81) zwischen zwei an demselben befestigte Kontakte (24,25;56,57; 69,70) erstreckt.

9. Stellantrieb nach Anspruch 8, dadurch gekennzeichnet, dass der Kontaktarm (20;55;71) in der Gehäuseöffnung (21) in Axialrichtung (A;E) der Antriebsspindel (6,13;36;41;80) gesehen relativ zum Gehäuse (17;48;81) bewegbar ist.

10. Stellantrieb nach Anspruch 5, dadurch gekennzeichnet, dass die Antriebsspindel (41) unmittelbar mit einem zwei Kontakte (56,57) tragenden Gehäuse (48) verbunden ist und Einrichtungen (46) zur Erteilung der Hubbewegungen (G) an das Gehäuse (48) besitzt und der Flansch (50) durch zwei Federn (51,52) im Gehäuse (48) abgestützt ist, das relativ zum Flansch (50) in Hubbewegungsrichtung (G) bewegbar ist und einen Kontaktarm (55) besitzt, der sich durch eine Oeffnung im Gehäuse (48) zwischen die Kontakte (56,57) erstreckt und der Flansch (50) zum Verbinden mit dem Arbeitsteil (53) eingerichtet ist.

11. Stellantrieb nach einem der Ansprüche 1 bis 10, dadurch gekennzeichnet, dass das mindestens eine federnde Element (18,19;51,52;65;76;82,83;84) eine Schrauben-, Blatt- oder Membranfeder oder eine Federscheibe oder ein federelastische Eigenschaften aufweisendes Material, wie z.B. Gummi, ist.

12. Stellantrieb nach einem der Ansprüche 1 bis 11, dadurch gekennzeichnet, dass zur Umwandlung der Drehbewegung in die Hubbewegung ein stationär angeordnetes Gewinde (8) vorgesehen ist, in welches die Antriebsspindel (6) mit einem Gegengewinde (8) eingreift und eine Einrichtung (11) zur Aufhebung der Drehbewegung vorgesehen ist.

13. Stellantrieb nach einem der Ansprüche 1 bis 11, dadurch gekennzeichnet, dass die Antriebsspindel in Hubrichtung (C) durch ein Gewinde (34) in einem Zahnrad antreibbar ist, das in ein Gewinde (35) der Antriebsspindel (36) eingreift.

14. Stellantrieb nach einem der Ansprüche 1 bis 11, dadurch gekennzeichnet, dass die Hubbewegung (G) dem Kupplungsteil (60) durch eine Kraftkupplung erteilbar ist.

15. Stellantrieb nach Anspruch 14, dadurch gekennzeichnet, dass die Antriebsspindel (41) einen Taumelflansch (46) besitzt, der in eine entsprechend ausgebildete Führung (47) im Kontaktträger (48) eingreift.

16. Stellantrieb nach einem der Ansprüche 1 bis 14, dadurch gekennzeichnet, dass die Elemente zur Umwandlung in die Hubbewegung ein Axialkugellager (11) enthalten, in dessen unterem Teil die Drehbewegung aufgehoben wird.

17. Stellantrieb nach Anspruch 16, dadurch gekennzeichnet, dass das Axialkugellager (11) zwischen der Antriebsspindel (6) und dem Kupplungsteil (15) vorliegt.

18. Stellantrieb nach einem der Ansprüche 1 bis 17, dadurch gekennzeichnet, dass das Zwischengetriebe (2;42) ein Planetengetriebe mit mindestens einem Planetenrad (3,4; 45) ist, bei dem die Antriebsspindel (6;41) auf der Welle des Sonnenrades (5;44) sitzt.

0090768

- 5 -

19. Stellantrieb nach Anspruch 18, dadurch gekennzeichnet, dass in das mindestens eine Planetenrad (3,4) ein äusserer, durch Hand betätigbarer Zahnring (2) eingreift.

20. Stellantrieb nach einem der Ansprüche 1 bis 19, dadurch gekennzeichnet, dass eine Entkupplungseinrichtung (38,39) für das Zwischengetriebe (2;42) vorgesehen ist.

21. Stellantrieb nach einem der Ansprüche 1 bis 20, dadurch gekennzeichnet, dass der mindestens eine Kontakt (24,25; 56,57;69,70) durch Steckverbindung mit dem Antriebselement (1,43) verbunden ist.

22. Stellantrieb an einem Ventil mit Hubbewegung, der ein Antriebselement mit Zwischengetriebe zur Erzeugung einer Drehbewegung und Elemente zur Umwandlung der Drehbewegung in eine Bewegung für eine mit der Antriebsspindel verbundene Ventilstange besitzt und der eine Ueberlastsicherung gegen unerwünschte Krafteinwirkungen auf die Arbeitsspindel aufweist, dadurch gekennzeichnet, dass die Antriebsspindel (6,13;36;41;63;75;80) mit der Ventilstange (29; 53;67;77) über einen Kupplungsteil (15;60;62;74;78) verbunden ist, bei dem die Antriebsspindel (6,13;36;41;63; 75;80) mit der Ventilstange (29;53;67;77) durch mindestens ein federndes Element (18,19;51,52;65;76;82,83;84) gekoppelt ist, das zwischen einem Kontaktträger (17;48;66,68; 73;81) und einem Kontaktbetätigungsteil (14,20;50,55;64,71; 75,71;79,71) mindestens einen am Kontaktträger (17;48;66,68; 73;81) befindlichen, mit dem Antriebselement (1;43) verbundenen Kontakt (24,25;56,57;69,70) betätigt.

23. Stellantrieb nach Anspruch 22 und einem oder mehreren der Ansprüche 2 bis 21, mit der Verbindung der Antriebsspindel (6;13;36;41;63;75;80) mit der Ventilstange (29;53;67;77) mittels des Kupplungsteils (15;60;62;74;78).

24. Verwendung des Stellantriebes nach einem oder mehreren der Ansprüche 1 bis 21 an einem Ventil, bei dem die Antriebsspindel über den Kupplungsteil mit der Ventilstange verbunden ist.

Fig. 1

0090768

1/3

Fig. 2

2/3

0090768

Fig. 3

Fig. 4

Fig. 5

Fig. 6

Fig. 7